# EUROPEAN PATENT APPLICATION

(11) **EP 3 503 010 A1**
(43) Date of publication of application: **26.06.2019**
(21) Application number: 17841262.3
(22) Date of filing: 24.05.2017
(51) Int. Cl.: G06Q 30/06

(54) **INFORMATION PROCESSING DEVICE, INFORMATION PROCESSING METHOD, AND PROGRAM**

(30) Priority: 19.08.2016 JP 2016161459
(71) Applicant: Sony Corporation, Tokyo 108-0075 (JP)
(72) Inventor: NAGASAKA, Hideo, Tokyo 108-0075 (JP)
(74) Representative: MFG Patentanwälte Meyer-Wildhagen Meggle-Freund Gerhard PartG mbB
(86) International application number: PCT/JP2017/019308
(87) International publication number: WO 2018/034034

(57) **Abstract**

[Object] To propose an information processing device, an information processing method, and a program which are capable of generating an appropriate order plan for products which are repeatedly purchased.

[Solution] An information processing device, including: an acquiring unit configured to acquire information of a plurality of types of products which are repeatedly purchased by a user; and an order planning unit configured to generate an order plan related to a plurality of orders of the plurality of types of products on the basis of a predetermined index.

## Description

### Technical Field

The present disclosure relates to an information processing device, an information processing method, and a program.

### Background Art

In the past, various kinds of technologies relating to electronic commerce (EC) such as online shopping have been developed.

For example, Patent Literature 1 discloses a technique that enables a user to input a product name by voice and purchase a product with the product name in online shopping.

### Citation List

### Patent Literature

Patent Literature 1: JP 2014-229278A

### Disclosure of Invention

### Technical Problem

Incidentally, for products repeatedly purchased by users such as, for example, daily necessities, it is desirable to order an appropriate quantity of products at an appropriate timing.

However, in the technique described in Patent Literature 1, it is necessary for a user to order a product at his/her own discretion. For this reason, in the technology described in Patent Literature 1, for example, for products which are repeatedly purchased, products may be ordered at an inappropriate timing due to the user's mistake in determination or an inappropriate quantity of products may be likely to be ordered.

In this regard, the present disclosure proposes an information processing device, an information processing method, and a program which are novel and improved and capable of generating an appropriate order plan for products which are repeatedly purchased.

### Solution to Problem

According to the present disclosure, there is provided an information processing device, including: an acquiring unit configured to acquire information of a plurality of types of products which are repeatedly purchased by a user; and an order planning unit configured to generate an order plan related to a plurality of orders of the plurality of types of products on the basis of a predetermined index.

In addition, according to the present disclosure, there is provided an information processing method, including: acquiring information of a plurality of types of products which are repeatedly purchased by a user; and generating, by a processor, an order plan related to a plurality of orders of the plurality of types of products on the basis of a predetermined index.

In addition, according to the present disclosure, there is provided a program for causing a computer to function as: an acquiring unit configured to acquire information of a plurality of types of products which are repeatedly purchased by a user; and an order planning unit configured to generate an order plan related to a plurality of orders of the plurality of types of products on the basis of a predetermined index.

### Advantageous Effects of Invention

As described above, according to the present disclosure, it is possible to generate an appropriate order plan for products which are repeatedly purchased. Further, the effects described here are not necessarily limiting, and any effect described in the present disclosure may be included.

### Brief Description of Drawings

FIG. 1 is an explanatory diagram illustrating a configuration example of an information processing system according to the present disclosure.
FIG. 2 is an explanatory diagram illustrating a display example of an EC service selection screen according to the embodiment.
FIG. 3 is an explanatory diagram illustrating a display example in which search results in a plurality of EC services according to the embodiment are simultaneously displayed.
FIG. 4 is an explanatory diagram illustrating an example in which a search is performed in individual services with the same search condition according to the embodiment.
FIG. 5 is a diagram for describing problems of the embodiment.
FIG. 6 is a functional block diagram illustrating a configuration example of an information processing device 10 according to the embodiment.
FIG. 7 is an explanatory diagram illustrating an example of an ordered product list 132 according to the embodiment.
FIG. 8 is an explanatory diagram illustrating an example of a general product purchase list 134 according to the embodiment.
FIG. 9 is an explanatory diagram illustrating a generation example of an order plan according to the embodiment.
FIG. 10 is an explanatory diagram illustrating an example of deciding a service of an order destination according to the embodiment.
FIG. 11 is an explanatory diagram illustrating a display example of an inquiry screen for selecting one of a plurality of order plan candidates according to the embodiment.
FIG. 12 is an explanatory diagram of an example of an inquiry about addition of a product to an ordered product list 132 according to the embodiment.
FIG. 13 is an explanatory diagram illustrating a display example of an inquiry screen for presenting a user with information of a new product according to the embodiment.
FIG. 14 is an explanatory diagram illustrating an example of an inquiry about a remaining quantity of a product according to the embodiment.
FIG. 15 is a flowchart illustrating a flow of automatic ordering according to the embodiment.
FIG. 16 is a sequence diagram illustrating a flow of manual ordering according to the embodiment.
FIG. 17 is an explanatory diagram illustrating a hardware configuration of an information processing device according to the embodiment.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Further, in this specification and the drawings, a plurality of constituent elements having substantially the same functional configuration are distinguished by attaching different letters after the same reference numerals. For example, a plurality of configurations having substantially the same functional configuration are distinguished like an information processing device 10a and an information processing device 10b if necessary. Here, in a case in which it is not necessary to particularly distinguish each of a plurality of constituent elements having substantially the same functional configuration, only the same reference numerals are attached. For example, in a case in which it is not necessary to particularly distinguish an information processing device 10a and an information processing device 10b, they are referred to simply as an information processing device 10.

Further, a "mode for carrying out the invention" will be described in accordance with the order of items described below.
1. Configuration of information processing system
2. Detailed description of embodiment
3. Hardware configuration
4. Modified example

### «1. Configuration of information processing system»

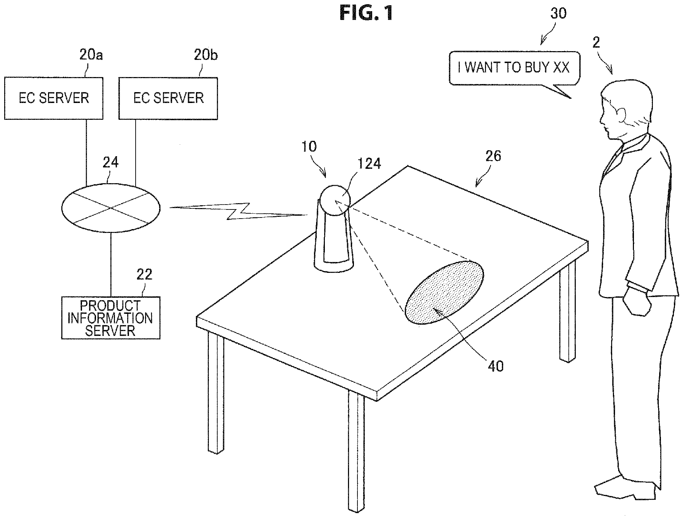

First, a configuration of the information processing system according to an embodiment of the present disclosure will be described with reference to FIG. 1. As illustrated in FIG. 1, the information processing system includes an information processing device 10, an EC server 20, a product information server 22, and a communication network 24.

### <1-1. EC server 20>

The EC server 20 is a device for managing a predetermined EC service. For example, the EC server 20 manages information of a plurality of products which are requested to be posted on EC sites managed by the EC server 20 from a plurality of service providers. Further, different EC servers 20 may manage separate EC services, respectively.

### <1-2. Information processing device 10>

The information processing device 10 is, for example, a device for placing an order for a product on the EC server 20. As illustrated in FIG. 1, the information processing device 10 may be placed on, for example, a desk, a wall, a ceiling, or the like in a predetermined building (for example, a user's home or the like). Further, the information processing device 10 is not limited to a device having the shape illustrated in FIG. 1. For example, the information processing device may be a general-purpose personal computer (PC), a tablet terminal, a game machine, a portable telephone such as a smart phone, a portable music player, a television receiver, a robot, or a wearable device such as a head mounted display (HMD), a headset, a smart watch, or the like.

The information processing device 10 can collect sounds such as speech of the user and perform voice recognition on the collected sounds. For example, the information processing device 10 can perform voice recognition on the collected speech and analyze a meaning of a voice recognition result.

Further, the information processing device 10 has a function of displaying images. For example, as illustrated in FIG. 1, the information processing device 10 can project an image onto a projection plane 26. Further, the information processing device 10 includes a display (not illustrated) and can display an image on the display.

Further, the information processing device 10 can communicate with other devices via the communication network 24. For example, when speech such as "I want to buy XXX" is collected, the information processing device 10 transmits a search request including a search keyword (for example, "XXX") specified from the speech to the EC server 20 via the communication network 24. Further, the information processing device 10 receives a search result from the EC server 20.

### {Usage example of EC service}

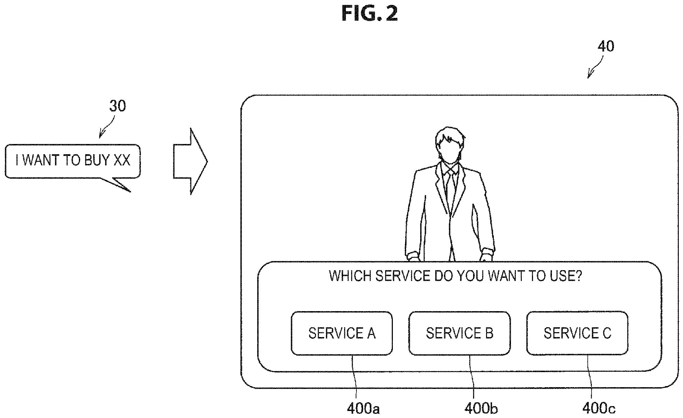

Further, in a case in which there are a plurality of types of EC services, the information processing device 10 can perform various kinds of processes related to usage of the plurality of EC services on the basis of, for example, a request from the user. For example, in a case in which speech 30 of the user "I want to buy XX" is collected, the information processing device 10 can display a selection screen 40 that allows the user to select any one of a plurality of EC services to be used as illustrated in FIG. 2. If the user selects a selection button 400a of a service A in the selection screen 40, the information processing device 10 transmits a search request including a search keyword "XX" to the EC server 20 managing the service A. Further, in the example illustrated in FIG. 2, instead of displaying selection buttons 400 of all EC services, for example, the information processing device 10 may display only selection buttons 400 of EC services dealing with products corresponding to the search keyword "XX" on the selection screen 40.

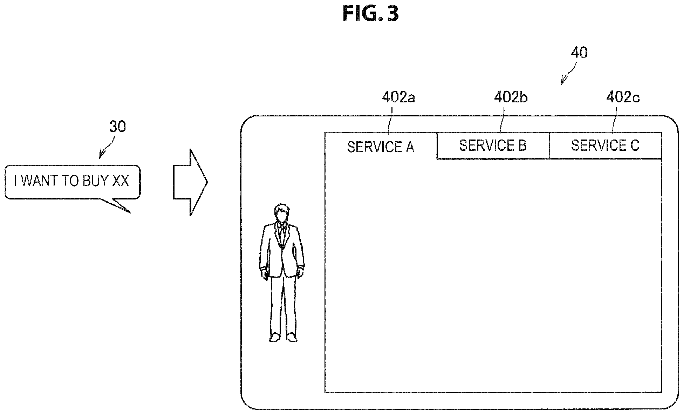

Alternatively, in a case in which the speech 30 "I want to buy XX" is collected, the information processing device 10 may display a display screen in which search results in a plurality of EC services are simultaneously displayed as illustrated in FIG. 3. For example, the information processing device 10 first transmits the search request including the search keyword "XX" to the EC servers 20 managing respective services. Then, the information processing device 10 can also classify search results received from the respective EC servers 20 for the respective services and display the classified search results on a display screen 40 as illustrated in FIG. 3.

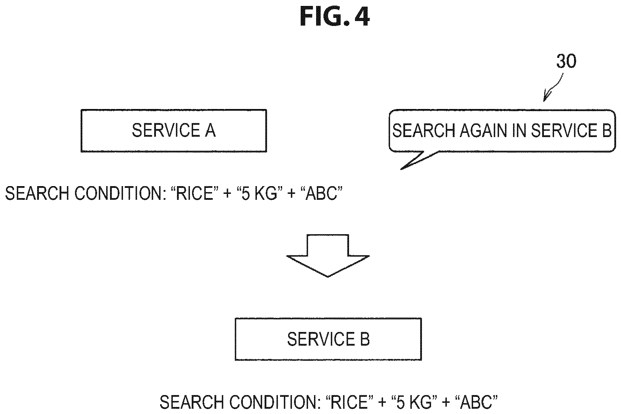

Alternatively, the information processing device 10 can also cause a search to be performed in other services with the same search condition as a search condition input by the user in a certain service on the basis of a request acquired from the user. For example, the user is assumed to utter speech 30 "search again in service B" after a search is performed in a service A using a search condition "rice" + "5 Kg" + "ABC" as illustrated in FIG. 4. In this case, the information processing device 10 can cause a search to be performed in the service B with the search condition by transmitting a search request including the same search condition as the search condition to the EC server 20 managing the service B.

### <1-3. Product information server 22>

The product information server 22 is a device that manages information related to a plurality of types of products (for example, advertisement information or the like). For example, in a case in which a new product related to a product which is currently on sale is announced, the product information server 22 stores information on the current product and the new product in association with each other. Further, the product information server 22 can transmit the information of the new product to, for example, another device such as the information processing device 10 each time a new product is announced.

### <1-4. Communication network 24>

The communication network 24 is a wired or wireless transmission path of information transmitted from devices connected to the communication network 24. For example, the communication network 24 may include a public line network such as a telephone network, the Internet, and a satellite communication network, various kinds of local area networks (LANs) including Ethernet (registered trademark), and a wide area network (WAN). Further, the communication network 24 may include a dedicated line network such as an Internet protocol-virtual private network (IP-VPN).

### <1-5. Description of problem>

The configuration of the information processing system according to the present embodiment has been described above. Incidentally, for example, daily necessities such as sanitary goods, detergents, and toiletries and foods such as processed foods and seasonings are generally purchased repeatedly by users who are general customers. Further, for such products, users tend to repeatedly purchase the relatively same product or desire to purchase as cheap products as possible. Further, users tend to desire to receive a certain amount of information collectively at a timing at which they can receive it.

In this regard, for example, a method in which a user places an order using an EC site so that a plurality of products serving as purchase targets can be received at a timing convenient for the user may be used. However, it is inconvenient for the user to order the same product at an EC site each time a product inventory quantity at home or a remaining quantity of a product decreases. Further, for example, it may be difficult for elderly people or the like to use EC sites. For this reason, it is desirable for products which are repeatedly purchased to be able to be ordered as automatically as possible.

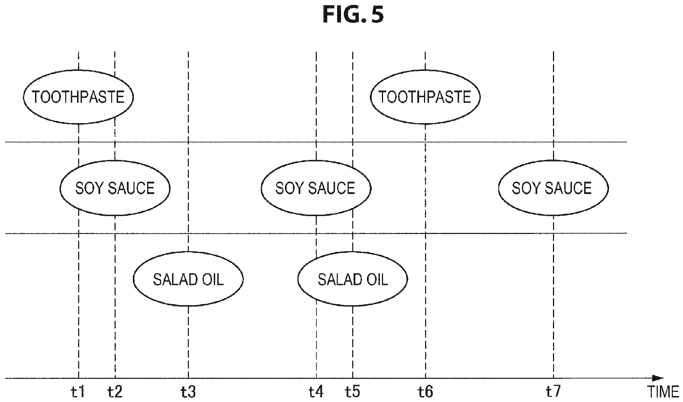

Incidentally, a relation between the number of orders and the number of user reception opportunities is proportional. For example, as illustrated in FIG. 5, if single products are ordered at different timings, for example, if toothpaste is ordered at a date and time t1, soy sauce is ordered at a date and time t2, and salad oil is ordered at a date and time t3, the reception opportunities of the user increase, and it is inconvenient. Therefore, it is desirable for a certain number of products to be able to be ordered at once. Further, there may be EC services with no shipping fee or a low shipping fee in a case in which a purchase price per order is a certain amount or more. Further, for example, since there are cases in which new products, bargain goods, or the like are the same in quality but lower in price or are the same in price but higher in quality, there is a merit of purchasing for the user.

In this regard, the information processing device 10 according to the present embodiment was invented in light of the foregoing. The information processing device 10 according to the present embodiment acquires information of a plurality of types of products which are repeatedly purchased by a user and generates an order plan related to a plurality of orders for the plurality of types of products on a predetermined index. Accordingly, it is possible to generate an optimal order plan for the user for the products which are repeatedly purchased.

### <<2. Detailed description of embodiment>>

### <2-1. Configuration>

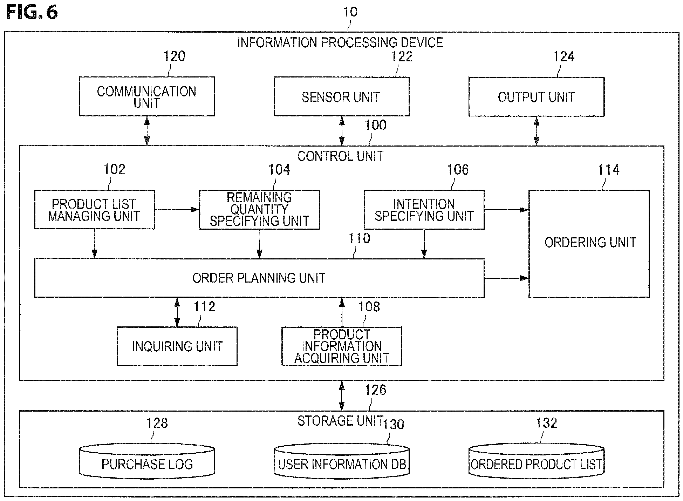

Next, a configuration of the present embodiment will be described in detail. FIG. 6 is a functional block diagram illustrating a configuration example of the information processing device 10 according to the present embodiment. As illustrated in FIG. 6, the information processing device 10 includes a control unit 100, a communication unit 120, a sensor unit 122, an output unit 124, and a storage unit 126.

### {2-1-1. Control unit 100}

The control unit 100 controls, for example, an operation of the information processing device 10 using hardware such as a central processing unit (CPU) 150 and a random access memory (RAM) 154 (which will be described later) which are installed in the information processing device 10 in general. Further, as illustrated in FIG. 6, the control unit 100 includes a product list managing unit 102, a remaining quantity specifying unit 104, an intention specifying unit 106, a product information acquiring unit 108, an order planning unit 110, an inquiring unit 112, and an ordering unit 114.

### {2-1-2. Product list managing unit 102}

### (2-1-2-1. Generation of ordered product list)

The product list managing unit 102 is an example of an acquiring unit in the present disclosure. The product list managing unit 102 acquires, for example, information of products which are repeatedly purchased by a corresponding user on the basis of a purchase log 128 stored in the storage unit 126 and generates an ordered product list 132. Here, the ordered product list 132 is a list in which a list of products repeatedly purchased by the user is registered. Further, the products registered in the ordered product list 132 can be automatically ordered by the ordering unit 114 to be described later. Further, the purchase log 128 is a database in which types, purchase dates, and the like of products which have been purchased by the user in the past are stored.

Further, for example, in a case in which an image of a receipt received by the user when a product is purchased at a store is stored in the information processing device 10 or other devices, the product list managing unit 102 may further acquire the information of the products which are repeatedly purchased by the corresponding user on the basis of an image analysis result for the receipt.

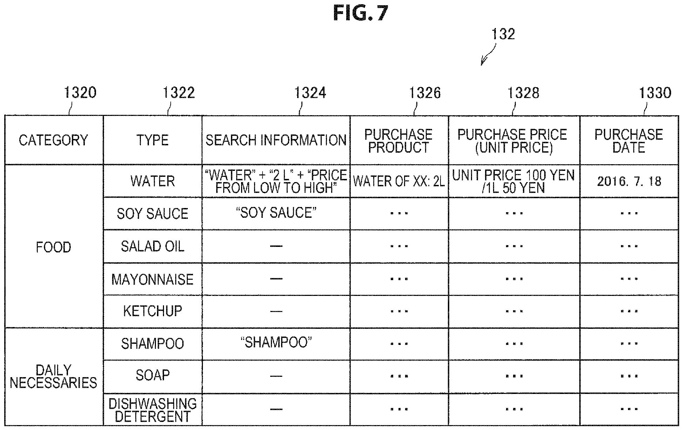

FIG. 7 is an explanatory diagram illustrating an example of the ordered product list 132. For example, as illustrated in FIG. 7, for example, a category 1320, a type 1322, search information 1324, a purchase product 1326, a purchase price 1328, and a purchase date 1330 are associated in the ordered product list 132. Here, for example, categories such as foods and daily necessities are recorded as the category 1320. Further, a type of each product registered as an automatic ordering target is recorded as the type 1322. Further, for example, a search condition, a narrowing-down condition, and the like used when the user searches for a corresponding type of product at an EC site are recorded as the search information 1324. Further, specific information (a product name, sales unit, and the like) of a product registered as an automatic ordering target for the corresponding type of product is recorded as the purchase product 1326. Further, a unit price of a corresponding product and a price per reference amount (for example, a price per unit, a price per reference amount (for example, 1 L or the like) of a corresponding product or the like) are recorded as the purchase price 1328. Further, a previous purchase date of a corresponding product is recorded as the purchase date 1330.

### (2-1-2-2 Update of ordered product list)

### - Comparison with general product purchase list

Further, the product list managing unit 102 can extract and update the information stored in the generated ordered product list 132. For example, the product list managing unit 102 updates content of the ordered product list 132 on the basis of a comparison between a general product purchase list 134 stored in an external device (not illustrated) and the ordered product list 132. As an example, the product list managing unit 102 automatically adds products which are not included in the ordered product list 132 among a plurality of types of products included in the general product purchase list 134 to the ordered product list 132.

Alternatively, in a case in which an inquiry of whether or not products which are not included in the ordered product list 132 among a plurality of types of products included in the general product purchase list 134 are added to the ordered product list 132 is performed by the inquiring unit 112 to be described later, the product list managing unit 102 adds the corresponding product to the ordered product list 132 only in a case in which a response of the user indicating permission with respect to the inquiry is obtained.

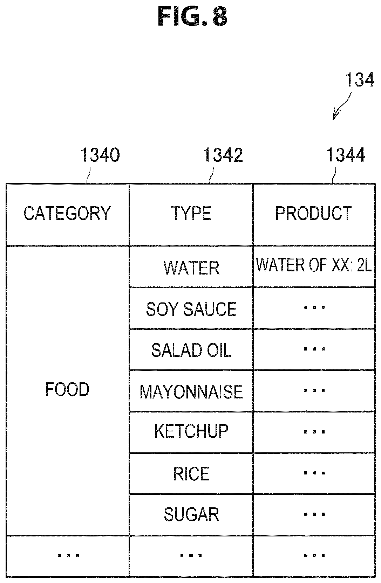

Here, the general product purchase list 134 is a list in which types of products purchased by many other users are recorded. For example, the general product purchase list 134 may be generated on the basis of product purchase histories of many other users. FIG. 8 is an explanatory diagram illustrating an example of the general product purchase list 134. As illustrated in FIG. 8, for example, a category 1340, a type 1342, and a product 1344 are associated in the general product purchase list 134. Further, content of the category 1340 and the type 1342 is roughly the same to those of the category 1320 and the type 1322 in the ordered product list 132 illustrated in FIG. 7, respectively. Further, a specific product name of a product which is most frequently purchased by other users for a corresponding type of product can be recorded as the product 1344.

In general, types of daily necessities or foods which are purchased by many users are roughly the same regardless of the user. For this reason, according to the update example described above, it is possible to efficiently add a type of product which is not registered in the ordered product list 132, for example, because a target user has never purchased a product at an EC site or the like, to the ordered product list 132. Therefore, since the types of products that can be automatically ordered increase, the convenience of the user is further improved.

### - Information of user

Further, the consumption of products tends to change depending on a life style, a family composition, or the like

In this regard, the product list managing unit 102 can further replace a product included in the ordered product list 132 or add a new product on the basis of the information related to a corresponding user. Here, the information related to the user may include, for example, an age, a sex, an address, a place of origin, a family composition (for example, the number of people, an age composition ratio, or the like), a life style (the frequency of eating-out or the like) and/or a health state (for example, a situation of an affected disease, a type of medicine being taken, or the like), and the like of the user. Further, such information can be stored in, for example, a user information DB 130. Further, some pieces of such information may be stored in an external device (not illustrated).

For example, in a case in which the user is an elderly person, it may be necessary to consider an amount of salt, cholesterol, and the like when the user eats. In this case, the product list managing unit 102 may automatically change a type of food (or a specific product) included in the ordered product list 132 to a food with less salt content or a food with less cholesterol. Alternatively, in a case in which an inquiry of whether or not the product included in the ordered product list 132 is changed is performed by the inquiring unit 112 to be described later, the product list managing unit 102 may replace the product included in the ordered product list 132 only in a case in which a response of the user indicating permission with respect to the inquiry is acquired.

Further, information of foods with low salt content, foods with less cholesterol, and the like can be registered in, for example, the EC server 20, the product information server 22, or other external devices. Further, information related to such foods can be specified on the basis of, for example, evaluation information for individual products by many other users, information of a total number of purchases of individual products by many other users, or recommendation information by specialists such as doctors or public health nurses (for example, information posted on a specialized site or the like).

Further, the information related to the user is not limited to static information, and may be dynamic information (for example, an analysis result of previous conversations between the user and his/her family members or the like). For example, in a case in which speech of the user "My cholesterol was high in last month's health check" is collected by the sensor unit 122 to be described later, the product list managing unit 102 may automatically change the product included in the ordered product list 132 to the product with less cholesterol. Alternatively, in this case, the product list managing unit 102 may inform the user of a reason for changing the product and then change the product included in the ordered product list 132 to the product with less cholesterol. Alternatively, an inquiry of whether or not the product included in the ordered product list 132 is changed can be performed by the inquiring unit 112. In this case, the product list managing unit 102 may replace the product included in the ordered product list 132 only in a case in which the response of the user indicating permission with respect to the inquiry is acquired.

According to these modifications, it is possible to add a product which is not recognized by the user as the automatic ordering target or set a product which is more desirable for the user as the automatic ordering target.

### - Nutritional balance

Further, the product list managing unit 102 may automatically add or replace another food so that the food included in the ordered product list 132 has a better nutritional balance.

### {2-1-3. Remaining quantity specifying unit 104}

The remaining quantity specifying unit 104 specifies a remaining quantity of each product included in the ordered product list 132 on the basis of analysis for the purchase log 128, a sensing result by the sensor unit 122, or the like. For example, the remaining quantity specifying unit 104 acquires a result of sensing the remaining quantity of each product included in the ordered product list 132 by the sensor unit 122 from the sensor unit 122. Further, the remaining quantity specifying unit 104 can analyze a product purchase interval of individual products stored in the purchase log 128 and anticipate the transition of the remaining quantity of the product.

### {2-1-4. Intention specifying unit 106}

The intention specifying unit 106 specifies a product purchase intention of the user in the EC service on the basis of, for example, speech collected by a microphone included in the sensor unit 122, a detection result of a gesture manipulation such as a touch manipulation, information input using another input device, or the like. For example, in a case in which the speech of the user "I want to buy XXX" is collected, the intention specifying unit 106 specifies that the user has an intention to purchase a product corresponding to the keyword "XXX" specified from a voice recognition result of the speech. Further, even in a case in which speech indirectly indicating a product purchase intention such as "We're out of detergent" is collected, the intention specifying unit 106 may specify that the user has an intention to purchase a product corresponding to the speech.

Further, in a case in which it is detected that the user is searching for the product at the EC site, the intention specifying unit 106 may also specify that the user has an intention to purchase a product corresponding to an input search condition.

### {2-1-5. Product information acquiring unit 108}

The product information acquiring unit 108 acquires, for example, information of a new product or a bargain product for individual products included in the ordered product list 132 from the product information server 22 (or the EC server 20). For example, the product information acquiring unit 108 may cause the communication unit 120 to transmit an acquisition request for information of a new product to the product information server 22 at predetermined time intervals and acquire the information of the new product from the product information server 22

### {2-1-6. Order planning unit 110}

The order planning unit 110 generates an order plan related to a plurality of orders of a plurality of types of products included in the ordered product list 132 on the basis of a predetermined index. For example, the order planning unit 110 generates a plan such as a timing of each of a plurality of orders, a type of a product ordered at each timing, and the number of products ordered at each timing on the basis of a predetermined index.

### (2-1-6-1. Index)

Here, the predetermined index may include the number of opportunities of reception of a product by the user. In this case, the order planning unit 110 generates the order plan so that the number of opportunities for the user to receive a product is reduced. For example, the order planning unit 110 generates the order plan so that a larger number of products or more types of products are ordered together at once.

Further, the predetermined index may include a total payment amount when the product included in the ordered product list 132 is purchased twice or more. In this case, the order planning unit 110 generates the order plan so that the total payment amount is reduced. Further, there are EC services in which a shipping fee may be free or cheap in a case in which a purchase price per order is a certain amount or more. In this regard, for example, the order planning unit 110 may generate the plan so that the number of products ordered by a single order is increased as much as possible to reduce a delivery fee or generate the plan so that the number of types of products ordered by a single order is increased as much as possible.

Further, the predetermined index may include information related to a quality of a product to be ordered. In this case, the order planning unit 110 generates the order plan so that the quality of one or more products to be ordered is improved. For example, in a case in which information of a new product related to a first product included in the ordered product list 132 is acquired by the product information acquiring unit 108, and information indicating that the quality of the new product is higher than the first product is acquired, the order planning unit 110 changes the order plan so that the new product instead of the first product is set as the order target. As an example, the order planning unit 110 updates the first product in the ordered product list 132 with the new product, and sets the new product as the order target instead of the first product.

Further, the predetermined index may include, for example, a quantity of inventory at home of the user for each product included in the ordered product list 132. In this case, the order planning unit 110 generates the order plan so that the quantity of inventory of each product is not increased as small as possible on the basis of the information of the remaining quantity of each product specified by the remaining quantity specifying unit 104.

### - Combination

Further, the order planning unit 110 may generate the order plan on the basis of a combination of a plurality types of indexes described above. For example, a priority of each of a plurality types of indexes described above may be set by the user. Then, the order planning unit 110 may generate the order plan on the basis of each of a plurality types of indexes described above and the priority of the index.

### (2-1-6-2. Example of deciding order target product)

A specific example of generating the order plan by the order planning unit 110 will be described in further detail below. For example, the order planning unit 110 decides, for example, a plurality of next or later order target products on the basis of a plurality of products registered in the ordered product list 132 and a remaining quantity of each of a plurality of products specified by the remaining quantity specifying unit 104.

Further, the order planning unit 110 may further decide the order target product in an individual order on the basis of a timing at which the product is ordered. For example, in a case in which the ordering time is summer, a summer product is decided as the order target, and in a case in which the ordering time is winter, a winter product is decided as the order target.

Further, the order planning unit 110 may further decided a quantity of order target products in an individual order on the basis of, for example, information of an average consumption of each product per month. Further, the information of the average consumption of each product can be acquired from an external device.

### (2-1-6-3. Example of deciding order timing and ordering quantity)

Further, the order planning unit 110 decides, for example, timings of a plurality of next or later orders on the basis of a plurality of products included in the ordered product list 132 and the remaining quantity of each of a plurality of products specified by the remaining quantity specifying unit 104. For example, the order planning unit 110 decides an order cycle of each of a plurality of products included in the ordered product list 132 on the basis of the purchase log 128 and decides, for example, timings of a plurality of next or later orders, a type of product ordered in each of a plurality of orders, and the number of products ordered in each of a plurality of orders.

### - Expiration date

For example, the order planning unit 110 further decides an order cycle of an individual product on the basis of information of an expiration date of an individual product included in the ordered product list 132 (for example, a best-before date, an expiration date, a use-by date, or the like). For example, the order planning unit 110 decides an order cycle to be reduced as a product is of type having a shorter expiration date. Alternatively, for a product with a short expiration date, the order planning unit 110 may reduce (subdivide) the number of purchased products per order or set a product with less content as the order target. For example, if "soy sauce of 1 L" is assumed to be currently ordered in a situation in which "soy sauce of 1 L" is registered in the ordered product list 132, it is assumed that "soy sauce of 1 L" is not entirely consumed before a best-before date, but "soy sauce of 500 ml" is presumed to be entirely consumed within the best-before date. In this case, the order planning unit 110 may decide to order "soy sauce of 500 ml" exceptionally instead of "soy sauce of 1 L."

Further, for a product having no expiration date (or has a very long expiration date) (such as toilet paper), the order planning unit 110 may generate the order plan so that more products are collectively ordered. For example, the order planning unit 110 may decide to order more products, such as "5 pieces" rather than "3 pieces" for each order.

### - Concrete example

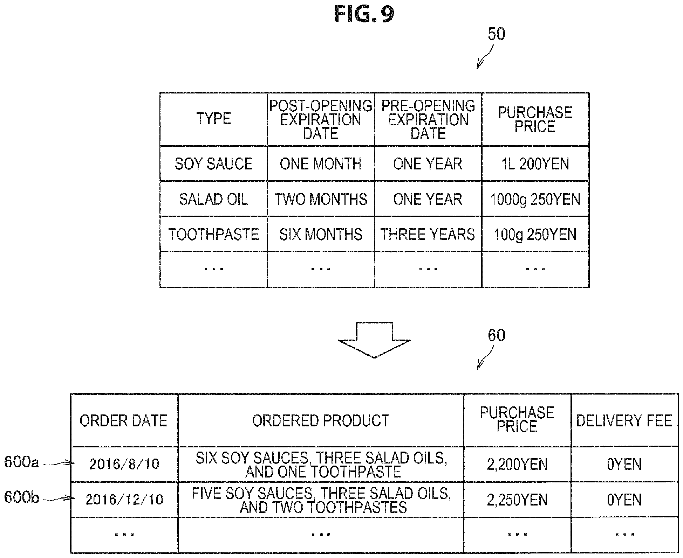

Here, an example (order plan 60) of the order plan generated by the order planning unit 110 will be described with reference to FIG. 9. Further, a product expiration date table 50 illustrated in FIG. 9 is a table in which an expiration date such as a best-before date of each type of product is recorded. Further, in the example illustrated in FIG. 9, a post-opening expiration date of "soy sauce" and a pre-opening expiration date are recorded in the product expiration date table 50 as "one month" and "one year." Further, in the example illustrated in FIG. 9, it is assumed that the delivery fee is free in a case in which a total payment amount is "2,000 yen" or more.

As illustrated in FIG. 9, the order planning unit 110 generates the order plans 60 of a plurality of orders on the basis of the product expiration date table 50. For example, the order planning unit 110 generates the order plans 60 of a plurality of orders using a condition that the number of orders of an individual product in a single order is within a range presumed to satisfy the pre-opening expiration date, a condition that the delivery fee in a single order is free (that is, a total payment amount is "2000 yen" or more), or a condition that the number of inventories is reduced as small as possible as a restriction condition. For example, as illustrated in FIG. 9, the order planning unit 110 generates a plane of ordering "six soy sauces, three salad oils, and one toothpaste" whose purchase price is "2,200 yen" collectively as a first order plan 600a. Further, the order planning unit 110 generates a plane of ordering "five soy sauces, three salad oils, and two toothpastes" whose purchase price is "2,250 yen" collectively as a second order plan 600b.

### (2-1-6-4. Example of deciding order destination)

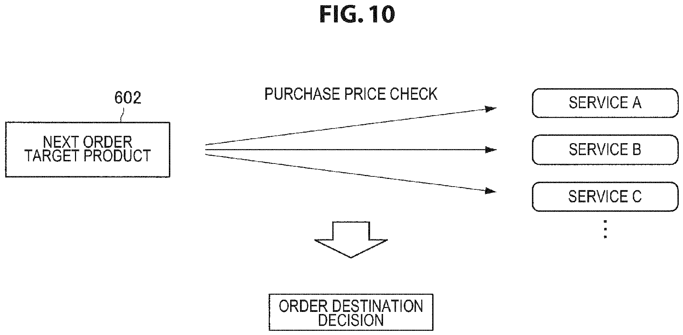

Further, in a case in which there are a plurality of services, the order planning unit 110 can decide a service of an order destination at an order timing for each decided order timing. For example, as illustrated in FIG. 10, the order planning unit 110 may inquire about a total payment amount of all order target products at the order timing for each order timing for each of a plurality of services and decide a service which is lowest in the total payment amount as the order destination.

Further, in order to increase a sales amount, each individual service (or store) may sell a product at a discounted price in a specific case. For example, in a case in which a current total sales amount is a certain amount or less, a condition that a total purchase price is discounted within an upper limit of a discount amount in a case in which a total purchase prices of a product group ordered from an individual user is a predetermined amount or more may be set in a certain service. Alternatively, a condition that a total purchase prices is discounted by a certain amount in a case in which the user orders a product before a predetermined date and time may be set in a certain service. In this regard, as a modified example, the order planning unit 110 may provide, for example, information of the ordered product list 132 for an individual service, acquire information such as an estimation of a total payment amount or a discount condition from an individual service, and generate the order plan (for a plurality of orders) so that the total payment amount is reduced. For example, the order planning unit 110 may decide the service of the order destination on the basis of the acquired estimation of the total payment amount of an individual service. Further, the order planning unit 110 may decides a product group of each next or later order target or decide an order timing of each next or later order so that the total payment amount is reduced on the basis of the acquired information of the discount condition.

Further, all the order target product in a single order may not be sold by only one service. In this case, the order planning unit 110 first divides all the order target products into a plurality of chunks (for example, two chunks). Then, the order planning unit 110 may decide a service in which all the products included in the chunk are being sold, and the purchase price is lowest as the order destination of the chunk for each of the divided chunks.

### (2-1-6-5. Generation of a plurality of candidates)

Further, the order planning unit 110 may generate, for example, a plurality of order plan candidates which differ a total payment amount (total amount) and a delivery date for each order timing and decide a candidate selected by the user among a plurality of candidates as order content at the corresponding timing.

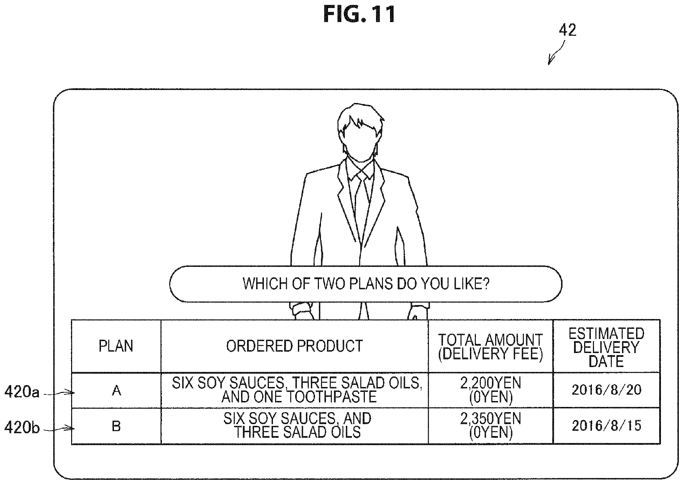

For example, as illustrated in FIG. 11, a plurality of candidates generated can be presented to the user by the inquiring unit 112 to be described later. Further, FIG. 11 illustrates an example in which an inquiry for causing the user to select any one out of a candidate 420a in which a total amount is low and an estimated delivery date is early and a candidate 420b which a total amount is high but an estimated delivery date is early is displayed in an inquiry screen 42. In the example illustrated in FIG. 11, if the user selects any one candidate 420, the order planning unit 110 decides an order plan corresponding to the selected candidate 420 as next order content. According to this example, the user is caused to select a candidate desired by the user among a plurality of order content candidates automatically generated on the basis of the predetermined index described above, and thus it is possible to place an order more appropriate for the needs of the user while improving convenience of placing an order.

### (2-1-6-6. Dynamic change)

### - Change of product

Further, as a modified example, the order planning unit 110 may change the generated order plan on the basis of the product purchase intention of the user specified by the intention specifying unit 106. For example, the order planning unit 110 may change the order plan so that a next or later order target product is changed on the basis of the specified purchase intention. As an example, in a case in which an intention to purchase a product corresponding to speech is specified by collecting speech "XXX ran out," and the product indicated by the purchase intention is not included in the next order target, the order planning unit 110 may change the order plan so that the product indicated by the purchase intention is added as the next order target.

According to this modification example, it is possible to automatically order a product with less remaining quantity or a product having inventory shortage at home of the user at an appropriate timing. In particular, it is effective, for example, in a case in which the accuracy of anticipation or detection of the remaining quantity of an individual product by the remaining quantity specifying unit 104 is low.

### - Change of timing

Further, the order planning unit 110 may change the order plan so that a timing of a next or later order is changed on the basis of the specified purchase intention. For example, the order planning unit 110 may change a timing of a next automatic ordering indicated by the generated order plan to coincide with (for example, advance) a timing of an order based on the purchase intention. As an example, in a case in which a voluntary intention of the user to purchase a product is specified, and at least one of products indicated by the purchase intention is different from all products included in the ordered product list 132, the order planning unit 110 may advance the timing of the next automatic ordering indicated by the generated order plan to the timing of the order based on the purchase intention. Alternatively, in a case in which a voluntary intention of the user to purchase a product is specified, and at least one of products indicated by the purchase intention is included in the ordered product list 132, the order planning unit 110 may advance the timing of the next automatic ordering including the product indicated by the purchase intention in the generated order plane as the order target to the timing of the order based on the purchase intention.

According to this modification example, the voluntary ordering of the user and one of the next or later automatic ordering are gathered into one. Therefore, the number of opportunities for the user to receive a product can be reduced. Further, since the purchase price per order is further increased, the total payment amount can be reduced, for example the delivery fee is further reduced.

### {2-1-7. Inquiring unit 112}

### (2-1-7-1. Inquiry about addition to ordered product list)

The inquiring unit 112 causes the output unit 124 to output information of an inquiry to the user. For example, the inquiring unit 112 causes the output unit 124 to output information of an inquiry of whether or not the product included in the general product purchase list 134 is added to the ordered product list 132 on the basis of a comparison between the general product purchase list 134 and the ordered product list 132 by the product list managing unit 102.

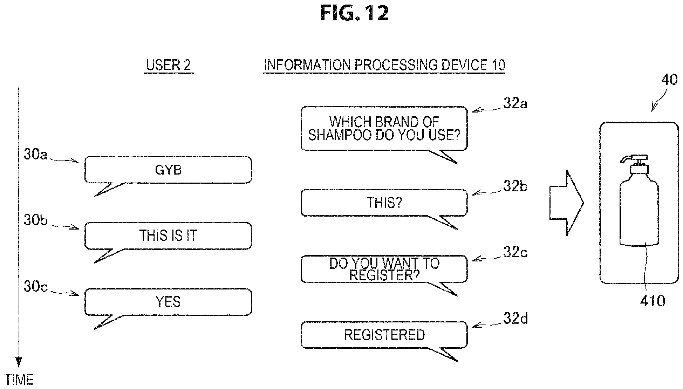

Here, this function will be described in further detail with reference to FIG. 12. FIG. 12 illustrates an example of an inquiry in a case in which "shampoo" is included in the general product purchase list 134, and "shampoo" is not included in the ordered product list 132. Further, a similar inquiry can be made even in a case in which "shampoo" is included in the ordered product list 132 as a type of order target product, but a specific product name is not registered.

In this case, as illustrated in FIG. 12, the inquiring unit 112 causes the output unit 124 to output, for example, a voice 32a of an inquiry such as "which brand of shampoo do you use?" Thereafter, in a case in which the user speaks a manufacturer name such as "GYB," for example, the inquiring unit 112 causes the display screen 40 to display an image 410 of a representative product of the manufacturer while causing the output unit 124 to output, for example, a voice 32b of an inquiry such as "this?"

Then, as illustrated in FIG. 12, in a case in which the user utters speech 30b indicating a specific product such as "that" or "AAA not that," the inquiring unit 112 specifies the corresponding product on the basis of analysis for the collected speech 30. Further, it is assumed that the inquiring unit 112 causes the output unit 124 to output a voice 32c of an inquiry "do you want to register?" and speech 30c indicating consent is collected as illustrated in FIG. 12. In this case, the inquiring unit 112 adds the product of the specified shampoo to the ordered product list 132.

### - Modified example

Further, instead of the example illustrated in FIG. 12, the inquiring unit 112 may cause the output unit 124 to output a voice such as, for example, "Please hold up container of shampoo you are using now." Further, in a case in which the shampoo container is held up against a camera (included in the sensor unit 122), the information processing device 10 can analyze an image captured by the camera and also specify a product being used by the user.

### (2-1-7-2. Inquiry about of change of ordered product list)

Further, in a case in which information of a new product, a bargain product, or the like is acquired by the product information acquiring unit 108, the inquiring unit 112 causes the output unit 124 to output information of an inquiry of whether or not the product included in the ordered product list 132 is changed to the product indicated by the acquired information.

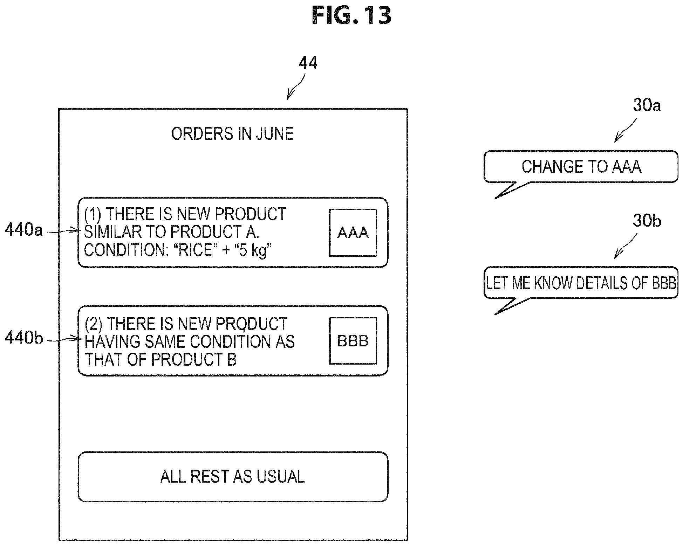

Here, this function will be described in further detail with reference to FIG. 13. Further, in FIG. 13, a product A and a product B are assumed to be registered in the ordered product list 132. For example, the inquiring unit 112 causes the output unit 124 to display an inquiry screen 44 indicating information of the product acquired by the product information acquiring unit 108. As illustrated in FIG. 13, the inquiry screen 44 includes a message 440a notifying of the presence of a new product (a product name "AAA") satisfying the search condition when the product A is searched for and a message 440b notifying of the presence of a new product (a product name "BBB") having the same attribute as that of the product B.

Further, a plurality of types of conditions related to the attribute of the product B may be set in advance, and a setting may be performed so that the message 440b is displayed only in a case in which the information of the new product satisfying a plurality of types of conditions is acquired. Further, the message 440b may be displayed only in a case in which a price of the product B is a predetermined price or more. Further, the new product ("BBB" in the example illustrated in FIG. 13) presented in the message 440b may be the cheapest product among the new products having the same attributes as the product B.

Further, as illustrated in FIG. 13, if speech 30a "change to AAA" is collected while the inquiry screen 44 is being displayed, the product list managing unit 102 may update a product list 132 so that the product A is replace with the new product "AAA" (as described above).

According to this inquiry example, the product registered in the ordered product list 132 can be changed to the new product on the basis of the response of the user. As a result, for example, it is possible to improve the quality of the product to be ordered or to reduce the purchase price of the product to be ordered.

### (2-1-7-3. Inquiry about remaining quantity)

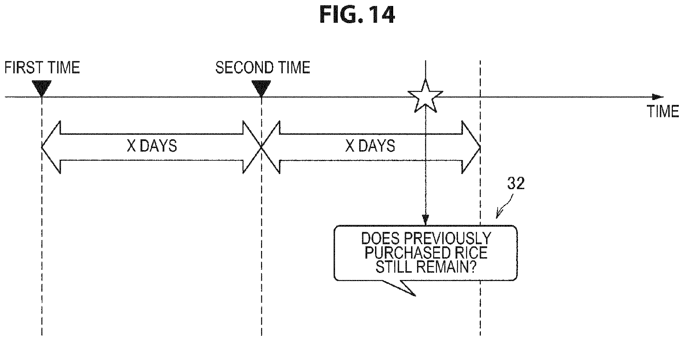

Further, the inquiring unit 112 can also inquire of the user about the current remaining quantity related to the product registered in the ordered product list 132. Here, this function will be described in further detail with reference to FIG. 14. FIG. 14 illustrates an example in which the same "rice" has been purchased twice in the past, and an interval between a timing at which the rice has been purchased for the first time and a timing at which the rice has been purchased for the second time is "X days." In this case, the inquiring unit 112 causes the output unit 124 to output a voice 32 of an inquiry of whether or not the purchased rice still remains shortly before the "X days" elapse from the timing at which the rice has been purchased for the second time. According to this example, it is possible to hear information related to the remaining quantity or the inventory of the product registered in the ordered product list 132 directly from the user.

### (2-1-7-4. Inquiry about order plan)

Further, in a case in which a plurality of order content candidates are generated by the order planning unit 110, the inquiring unit 112 causes the output unit 124 to output information of an inquiry for causing the user to select any one of a plurality of order content candidates, for example, as illustrated in FIG. 11.

### {2-1-8. Ordering unit 114}

The ordering unit 114 places an order on the EC server 20 on the basis of a plurality of order plans generated by the order planning unit 110. For example, in a case in which the next order timing indicated by the order plan arrives, the ordering unit 114 automatically places an order for products of each of the next order targets indicated by the order planes on, for example, the EC server corresponding to the order destination designated as the next order destination by a designated number.

### {2-1-9. Communication unit 120}

The communication unit 120 performs transmission and reception of information with other devices, for example, via the communication network 24. For example, the communication unit 120 transmits order information to the EC server 20 of the order destination under the control by the ordering unit 114. Further, the communication unit 120 receives the information of the new product from the product information server 22 or the EC server 20.

### {2-1-10. Sensor unit 122}

The sensor unit 122 may include, for example, an image sensor (camera), a microphone, and the like. For example, the camera captures an image ahead of the camera at a predetermined timing (for example, at predetermined time intervals or the like). Further, for example, the microphone detects external sounds (air vibration) such as the speech of the user, and converts them into electric signals. Further, the sensor unit 122 may further include a triaxial acceleration sensor, a gyroscope, a magnetic sensor, or the like.

### {2-1-11. Output unit 124}

The output unit 124 may include a display (not illustrated) and a voice output unit (not illustrated). For example, the display unit displays an inquiry screen under the control of the inquiring unit 112. Further, the voice output unit outputs an inquiry voice under the control of the inquiring unit 112.

### {2-1-12. Storage unit 126}

The storage unit 126 stores various kinds of data and various kinds of software. For example, as illustrated in FIG. 6, the storage unit 126 stores the purchase log 128, the user information DB 130, and the ordered product list 132.

### <2-2. Flow of process>

The configuration of the present embodiment has been described above. Next, a flow of a process according to the present embodiment will be described in "2-2-1. Flow of automatic ordering" and "2-2-2. Flow of manual ordering." Further, "2-2-1. Flow of automatic ordering" and "2-2-2. Flow of manual ordering" may be executed in parallel.

### {2-2-1. Flow of automatic ordering}

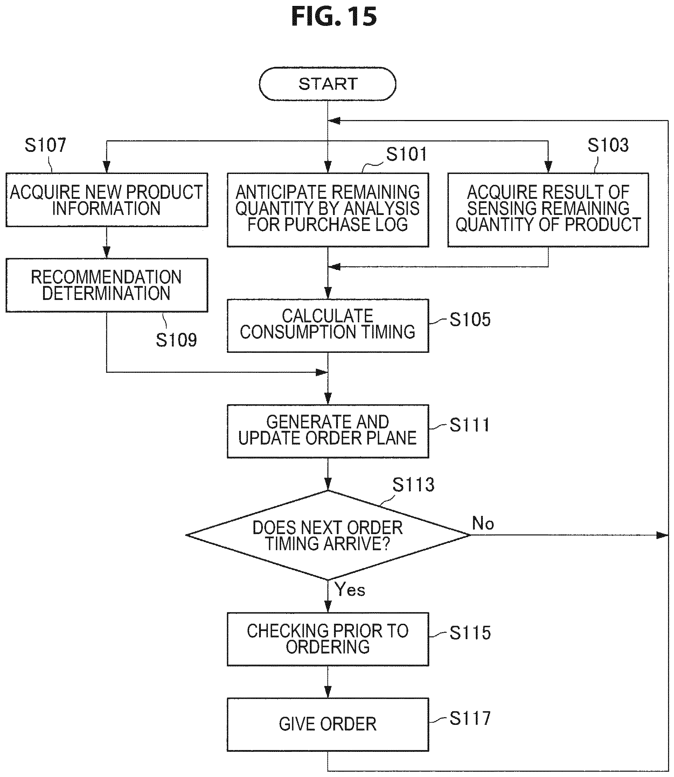

First, a "flow of automatic ordering" according to the present embodiment will be described with reference to FIG. 15. As illustrated in FIG. 15, first, the remaining quantity specifying unit 104 anticipates the transition of the remaining quantity of each product included in the ordered product list 132 on the basis of the analysis for the purchase log 128 (SI01). Further, the remaining quantity specifying unit 104 acquires a result of sensing each product included in the ordered product list 132 by the sensor unit 122 (S103).

Thereafter, the order planning unit 110 calculates, for example, a timing at which each product included in the ordered product list 132 runs out on the basis of the result anticipated in S101 and the sensing result acquired in S103 (S105). Thereafter, the information processing device 10 performs the process of S111 to be described later.

Further, for example, when a new product related to each product included in the ordered product list 132 is announced, the product information acquiring unit 108 acquires information of the new product from the product information server 22 (SI07).

Thereafter, on the basis of the acquired information of the new product (and the search history stored in the purchase log 128 or the like, the information stored in the user information DB 130, or the like), the order planning unit 110 determines whether or not the new product is recommended to the user (S109).

Thereafter, on the basis of the predetermined index, the consumption timing calculated in S105, and the information of the new product determined to be recommended in S109, the order planning unit 110 generates (or updates) a plurality of order planes related to an individual product included in the ordered product list 132 (S111).

Then, in a case in which the next order timing indicated by the order plan generated in Sill does not arrive (No in S113), the information processing device 10 performs the process of S101, S103, and S107 again.

On the other hand, in a case in which the next order timing indicated by the order plan generated in S111 arrives (Yes in SI13), the inquiring unit 112 presents the user with information indicating order content at the next order timing (for example, a type of product to be ordered, the number of products to be ordered, a total payment amount, or the like) (S115). Further, the process of S115 may be omitted.

Thereafter, the ordering unit 114 places an order on the EC server 20 of the order destination on the basis of the order content at the next order timing indicated by the order plan (S117). Then, the information processing device 10 performs the process of S101, S103, and S107 again.

### {2-2-2. Flow of manual ordering}

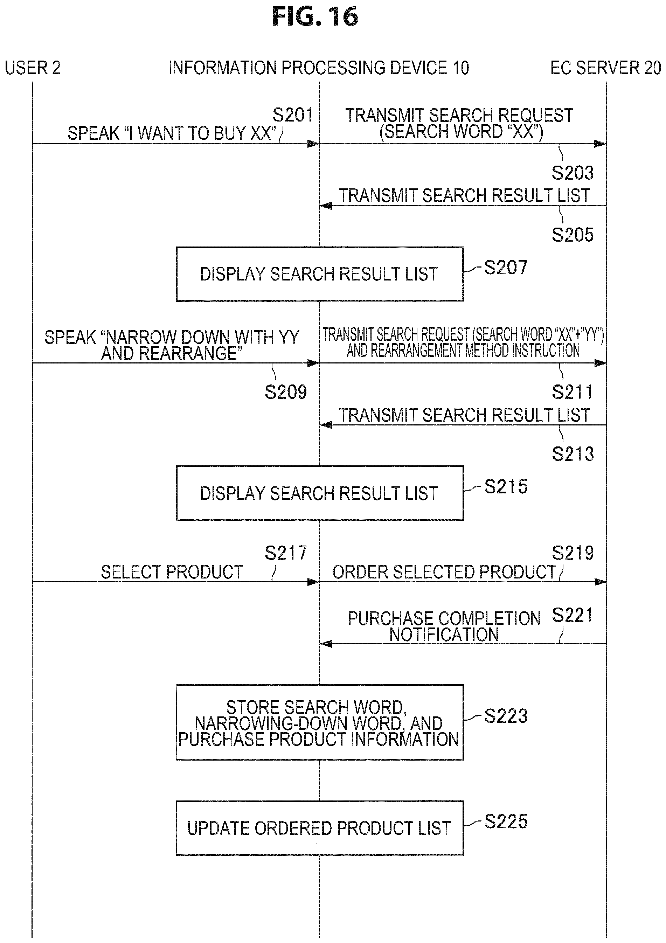

Next, a "flow of manual ordering" according to the present embodiment will be described with reference to FIG. 16. As illustrated in FIG. 16, first, a user 2 speaks "I want to buy XX" toward the information processing device 10 (S201).

Then, the control unit 100 of the information processing device 10 generates a search request by setting the keyword "XX" specified from the speech voice recognition result collected in S201 as the search word. Then, the communication unit 120 transmits the generated search request to the EC server 20 under the control of the control unit 100 (S203).

Thereafter, the EC server 20 searches a database in which information of a plurality of products is registered on the basis of the received search request. Then, the EC server 20 transmits a search result list to the information processing device 10 (S205).

Thereafter, the output unit 124 of the information processing device 10 displays a received search result list under the control of the control unit 100 (S207).

Thereafter, the user 2 speaks "narrow down and sort with YY" toward the information processing device 10 (S209).

Then, the control unit 100 of the information processing device 10 generates a search request by setting the keyword "XX" specified from the voice recognition result of S201 and the keyword "YY" specified from the voice recognition result of S209 as the search word. Further, the control unit 100 generates display instruction information for causing the search results to be displayed in an arrangement method corresponding to the voice recognition result of S209. Then, the communication unit 120 transmits the generated search request and the display instruction information to the server 20 (S211).

Thereafter, the EC server 20 performs a search on the basis of the received search request, and changes the arrangement order of the acquired search results on the basis of the received display instruction information. Then, the EC server 20 transmits a search result list in which the arrangement order is changed to the information processing device 10 (S213).

Thereafter, the output unit 124 of the information processing device 10 displays a received search result list under the control of the control unit 100 (S215).

Thereafter, the user 2 views the search result list displayed in S215 and selects a product desired to be purchased by speech, a touch manipulation, or the like (S217).

Thereafter, the control unit 100 of the information processing device 10 specifies the product selected in S217. Then, the ordering unit 114 places an order for the specified product on the EC server 20 (S219).

Thereafter, the EC server 20 performs a payment process for the product ordered in S219. Further, after the payment process is completed, the EC server 20 transmits a purchase completion notification to the information processing device 10 (S221).

Thereafter, the control unit 100 of the information processing device 10 additionally registers the search word and the narrowing-down word in S211 and the information of the product ordered in S219 to the purchase log 128 (S223). Then, the product list managing unit 102 updates the content of the ordered product list 132 on the basis of the updated purchase log 128 (S225).

### <2-3. Effects>

As described above, according to the present embodiment, the information processing device 10 acquires the information of a plurality of types of products repeatedly purchased by the user and generates an order plan related to a plurality of orders for a plurality of types of products on the basis of the predetermined index. Accordingly, the information processing device 10 can generate an order plan optimum for the user for the products which are repeatedly purchased. For example, the information processing device 10 can generate the order plane so that the number of opportunities for the user to receive a product is reduced as small as possible, the total payment amount at the time of a plurality of purchases is reduced as small as possible, or the quality of a product to be purchased is improved.

### <<3. Hardware configuration>>

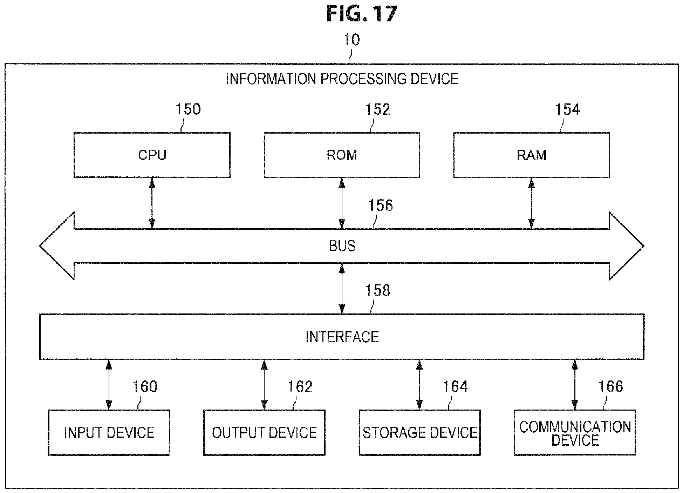

Next, a hardware configuration of the agent device 10 according to the present embodiment will be described with reference to FIG. 17. As illustrated in FIG. 17, the information processing device 10 includes a CPU 150, a Read Only Memory (ROM) 152, a RAM 154, a bus 156, an interface 158, an input device 160, an output device 162, a storage device 164, and a communication device 166.

The CPU 150 functions as an arithmetic processing unit and a control unit, and controls an overall operation of the information processing device 10 in accordance with various kinds of programs. Further, the CPU 150 implements the function of the control unit 100 in the information processing device 10. Further, the CPU 150 is constituted by a processor such as a microprocessor.

The ROM 152 stores, for example, control data such as a program, an operation parameter, and the like used by the CPU 150.

The RAM 154 temporarily stores, for example, a program executed by the CPU 150.

The bus 156 is constituted by a CPU bus or the like. The bus 156 connects the CPU 150, the ROM 152, and the RAM 154.

The interface 158 connects the input device 160, the output device 162, the storage device 164, and the communication device 166 to the bus 156.

The input device 160 includes an input unit in which the user inputs information such as, for example, a touch panel, a button, a switch, a lever, a microphone, or the like, an input control circuit that generates an input signal on the basis of an input by user and outputs the input signal it to the CPU 150.

The output device 162 includes a projector or a display device such as a display such as a liquid crystal display (LCD) or an organic light emitting diode (OLED). Further, the output device 162 includes a voice output device such as a speaker.

The storage device 164 is a data storage device functioning as the storage unit 126. The storage device 164 includes, for example, a storage medium, a recording device for recording data in a storage medium, a reading device for reading data from a storage medium, a deletion device for deleting data recorded in a storage medium, and the like.

The communication device 166 is a communication interface constituted by a communication device or the like for establishing a connection with, for example, a communication network 24 or the like. Further, the communication device 166 may be a communication device that supports a wireless LAN, a communication device that supports Long Term Evolution (LTE), or a wire communication device that performs communication in a wired manner. This communication device 166 functions as the communication unit 120.

### <<4. Modified example>>

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

### <4-1. First modified example>

For example, in a case in which the product registered in the ordered product list 132 is changed or a new product is added, the information processing device 10 may then inquire of the user about an impression of the changed product (for example, it is good or bad, or the like) at a predetermined timing and propose replacement of the product to the user in response to the response of the user with respect to the inquiry.

As an example, in a case in which the product "shampoo" (hereinafter referred to as a "shampoo A") registered in the ordered product list 132 is changed to another product (hereinafter referred to as a "shampoo B"), the information processing device 10 outputs a voice of an inquiry such as, for example, "what do you think of new shampoo?" t a predetermined timing. Thereafter, in a case in which the user speaks "not really good," the information processing device 10 outputs a voice of suggesting replacement such as, for example, "do you want to replace?" Thereafter, for example, in a case in which the user speaks "return to previous," the information processing device 10 changes the "shampoo B" registered in the ordered product list 132 to the "shampoo A" again.

Further, when such an inquiry is given to many users, the information processing device 10 can acquire statistical data, for example, indicating that those who like the "shampoo A" are highly unlikely to like the "shampoo B." Further, the information processing device 10 can further propose replacement of the product to another user on the basis of the statistical data.

### <4-2. Second modified example>

Further, as another modified example, the information processing device 10 may also control whether or not the purchase of the product at the EC site by other users such as the family members of the user is permitted. As an example, the user information DB 130 may further store, for example, information of other users such as the family members of the user. Then, in a case in which another user intends to purchase the product at the EC site, the information processing device 10 may control whether or not the purchase of the product is permitted on the basis of the product of the purchase target. For example, in a case in which the price of the product of the purchase target is a predetermined price or more or in a case in which it is a favorite item (such as liquor), the information processing device 10 may request the user to input a password and permit the purchase of the product only in a case in which the input password is valid. Further, in a case in which the price of the product of purchase target is less than a predetermined price or in a case in which it is daily necessities, the information processing device 10 may permit the purchase of the product.

Further, the information processing device 10 may control whether or not the purchase of the product is permitted on the basis of a determination result for the user who desires to purchase the product. For example, in a case in which it is determined that the user is an adult, the information processing device 10 may permit the purchase of the product. Further, in a case in which the user is determined to be a kid, the information processing device 10 may automatically transmits an inquiry e-mail regarding the permission of the purchase of the product by the user to a parent of the user and permit the purchase of the product by the user only in a case in which a response indicating the permission is received from the parent. Further, the information processing device 10 may identify the user on the basis of, for example, an analysis result for a face image captured by the camera included in the sensor unit 122 or the like.

### <4-3. Modified example 3>

Further, the configuration of the information processing system according to the present embodiment is not limited to the example illustrated in FIG. 1. For example, although only one information processing device 10 is illustrated in FIG. 1, the present disclosure is not limited to such an example, and a plurality of computers may cooperatively operate to implement the above-described functions of the information processing 10.

### <4-4. Fourth modified example>

Further, the configuration of the information processing device 10 according to the present embodiment is not limited to the example illustrated in FIG. 6. For example, one or more of the sensor unit 122 and the output unit 124 may be included in another device which can communicate with the information processing device 10 instead of being included in the information processing device 10. Further, one or more of the purchase log 128, the user information DB 130, and the ordered product list 132 may be stored in another device which can communicate with the information processing device 10 instead of being stored in the storage unit 126.

### <4-5. Fifth modified example>

Further, in a case in which the EC server 20 or the product information server 22 includes the respective constituent elements included in the control unit 100 described above, the information processing device according to the present disclosure may be the EC server 20 or the product information server 22.

### <4-6. Modified example 8>

Further, steps in the flow of the process illustrated in FIGS. 15 to 16 need not be necessarily processed in the described order. For example, steps may be processed in a properly changed order. Further, steps may not be processed chronologically but may be processed in parallel or individually. Further, some of steps described may be omitted, or another step may be added.

Further, according to the above embodiment, it is also possible to provide a computer program causing hardware such as the CPU 150, the ROM 152, the RAM 154, and the like to perform the same functions as the components of the information processing device 10 according to the above-described embodiment. Further, a storage medium in which the computer program is recorded is also provided.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing device, including:
   an acquiring unit configured to acquire information of a plurality of types of products which are repeatedly purchased by a user; and
   an order planning unit configured to generate an order plan related to a plurality of orders of the plurality of types of products on the basis of a predetermined index.
(2) The information processing device according to (1), in which the predetermined index includes the number of opportunities for the user to receive the product.
(3) The information processing device according to (2), in which the order planning unit generates the order plan so that the number of receiving opportunities is reduced.
(4) The information processing device according to any one of (1) to (3), in which the predetermined index includes a total payment amount when one or more products among the plurality of types of products are purchased one or more times.
(5) The information processing device according to (4), in which the order planning unit generates the order plan so that the total payment amount is further reduced.
(6) The information processing device according to any one of (1) to (5), in which the predetermined index includes information related to a quality of a product to be ordered.
(7) The information processing device according to (6), in which
   the acquiring unit further acquires information of a second product estimated to be higher in quality than a first product included in the plurality of types of products, and
   when the information of the second product is acquired by the acquiring unit, the order planning unit changes the order plan by setting the second product as an order target instead of the first product.
(8) The information processing device according to any one of (1) to (7), in which the order planning unit further generates the order plan on the basis of a comparison between a product list corresponding to a purchase history of another user and the plurality of types of products.
(9) The information processing device according to (8), in which the order planning unit generates the order plan by further adding a product other than the plurality of types of products among a plurality of products indicated by the product list to an order target.
(10) The information processing device according to (8), further including:
   an inquiring unit configured to inquire of the user whether or not a product other than the plurality of types of products among a plurality of products indicated by the product list is further added to an order target,
   in which the order planning unit further generates the order plan on the basis of a response of the user with respect to the inquiry.
(11) The information processing device according to any one of (1) to (10), in which
   the acquiring unit further acquires information indicating a product purchase intention of the user, and
   when the information indicating the purchase intention is acquired, the order planning unit changes the order plan so that a next order timing indicated by the order plan coincides with a timing of an order based on the purchase intention.
(12) The information processing device according to (11), in which the order planning unit changes the order plan so that the next order timing indicated by the order plan coincides with the timing of the order based on the purchase intention on the basis of a comparison between a product of a purchase target indicated by the purchase intention and the plurality of types of products.
(13) The information processing device according to (11) or (12), in which the acquiring unit acquires the information indicating the purchase intention on the basis of collected speech of the user.
(14) The information processing device according to any one of (1) to (13), in which
   the acquiring unit further acquires information related to the user, and
   the order planning unit further generates the order plan on the basis of the information related to the user.
(15) The information processing device according to (14), in which the information related to the user includes information indicating content of a past conversation of the user.
(16) The information processing device according to any one of (1) to (15), in which the information of the plurality of types of products is specified on the basis of a product purchase history of the user.
(17) The information processing device according to any one of (1) to (16), further including:
   an ordering unit configured to order one or more products on the basis of the order plan.
(18) The information processing device according to any one of (1) to (17), in which the order plan includes a plan related to a timing of each of the plurality of orders and a type of product ordered in each of the plurality of orders.
(19) An information processing method, including:
   acquiring information of a plurality of types of products which are repeatedly purchased by a user; and
   generating, by a processor, an order plan related to a plurality of orders of the plurality of types of products on the basis of a predetermined index.
(20) A program for causing a computer to function as:
   an acquiring unit configured to acquire information of a plurality of types of products which are repeatedly purchased by a user; and
   an order planning unit configured to generate an order plan related to a plurality of orders of the plurality of types of products on the basis of a predetermined index.

### Reference Signs List

- 10: information processing device
- 20: EC server
- 22: product information server
- 24: communication network
- 100: control unit
- 102: product list managing unit
- 104: remaining quantity specifying unit
- 106: intention specifying unit
- 108: product information acquiring unit
- 110: order planning unit
- 112: inquiring unit
- 114: ordering unit
- 120: communication unit
- 122: sensor unit
- 124: output unit
- 126: storage unit
- 128: purchase log
- 130: user information DB
- 132: ordered product list

## Claims

1. An information processing device, comprising:
an acquiring unit configured to acquire information of a plurality of types of products which are repeatedly purchased by a user; and
an order planning unit configured to generate an order plan related to a plurality of orders of the plurality of types of products on a basis of a predetermined index.

2. The information processing device according to claim 1, wherein the predetermined index includes a number of opportunities for the user to receive the product.

3. The information processing device according to claim 2, wherein the order planning unit generates the order plan so that the number of receiving opportunities is reduced.

4. The information processing device according to claim 1, wherein the predetermined index includes a total payment amount when one or more products among the plurality of types of products are purchased one or more times.

5. The information processing device according to claim 4, wherein the order planning unit generates the order plan so that the total payment amount is further reduced.

6. The information processing device according to claim 1, wherein the predetermined index includes information related to a quality of a product to be ordered.

7. The information processing device according to claim 6, wherein
the acquiring unit further acquires information of a second product estimated to be higher in quality than a first product included in the plurality of types of products, and
when the information of the second product is acquired by the acquiring unit, the order planning unit changes the order plan by setting the second product as an order target instead of the first product.

8. The information processing device according to claim 1, wherein the order planning unit further generates the order plan on a basis of a comparison between a product list corresponding to a purchase history of another user and the plurality of types of products.

9. The information processing device according to claim 8, wherein the order planning unit generates the order plan by further adding a product other than the plurality of types of products among a plurality of products indicated by the product list to an order target.

10. The information processing device according to claim 8, further comprising:
an inquiring unit configured to inquire of the user whether or not a product other than the plurality of types of products among a plurality of products indicated by the product list is further added to an order target,
wherein the order planning unit further generates the order plan on a basis of a response of the user with respect to the inquiry.

11. The information processing device according to claim 1, wherein
the acquiring unit further acquires information indicating a product purchase intention of the user, and
when the information indicating the purchase intention is acquired, the order planning unit changes the order plan so that a next order timing indicated by the order plan coincides with a timing of an order based on the purchase intention.

12. The information processing device according to claim 11, wherein the order planning unit changes the order plan so that the next order timing indicated by the order plan coincides with the timing of the order based on the purchase intention on a basis of a comparison between a product of a purchase target indicated by the purchase intention and the plurality of types of products.

13. The information processing device according to claim 11, wherein the acquiring unit acquires the information indicating the purchase intention on a basis of collected speech of the user.

14. The information processing device according to claim 1, wherein
the acquiring unit further acquires information related to the user, and
the order planning unit further generates the order plan on a basis of the information related to the user.

15. The information processing device according to claim 14, wherein the information related to the user includes information indicating content of a past conversation of the user.

16. The information processing device according to claim 1, wherein the information of the plurality of types of products is specified on a basis of a product purchase history of the user.

17. The information processing device according to claim 1, further comprising:
an ordering unit configured to order one or more products on a basis of the order plan.

18. The information processing device according to claim 1, wherein the order plan includes a plan related to a timing of each of the plurality of orders and a type of product ordered in each of the plurality of orders.

19. An information processing method, comprising:
acquiring information of a plurality of types of products which are repeatedly purchased by a user; and
generating, by a processor, an order plan related to a plurality of orders of the plurality of types of products on a basis of a predetermined index.

20. A program for causing a computer to function as:
an acquiring unit configured to acquire information of a plurality of types of products which are repeatedly purchased by a user; and
an order planning unit configured to generate an order plan related to a plurality of orders of the plurality of types of products on a basis of a predetermined index.
